# EUROPEAN PATENT SPECIFICATION

(11) **EP 2 272 917 B1**
(45) Date of publication and mention of the grant of the patent: **28.11.2012**
(21) Application number: 10166503.2
(22) Date of filing: 11.01.2002
(51) Int. Cl.: C08G 64/18, C08L 67/03, C08L 69/00, C08L 83/10, C08L 101/00

(54) **Use of a polycarbonate resin compositions for laser marking and molded articles made thereof**
Verwendung von Polycarbonatzusammensetzungen für die Lasermarkierung und daraus hergestellte Formkörper
Usage des compositions de résine polycarbonate destinées au marquage au laser et articles moules obtenus

(30) Priority: 22.01.2001 JP 2001013410; 08.03.2001 JP 2001064778; 12.03.2001 JP 2001068332
(43) Date of publication of application: 12.01.2011
(62) Divisional of application: 02716304.7
(73) Proprietor: Idemitsu Kosan Co., Ltd., Chiyoda-ku Tokyo 100-8321 (JP)
(72) Inventor: Nodera, Akio, Ichihara-shi, Chiba 299-0107 (JP)
(74) Representative: Gille Hrabal

(56) References cited:
- EP-A- 0 522 751
- EP-A- 1 142 956
- US-A- 3 971 756
- US-A- 4 263 201
- US-A- 5 840 791

## Description

### Technical Field

The present invention relates to a resin composition used for laser marking (hereinafter the resin composition may be referred to as a "laser marking resin composition," respectively), and to a molded product formed from the resin or the resin composition. More particularly, the present invention relates to the use of a laser marking resin composition which enables formation of a distinct marking on a molded product thereof through irradiation with a laser beam.

### Background Art

Conventionally, marking on thermoplastic resin products has generally been performed through printing techniques employing ink; for example, spraying of ink by means of an inkjet technique, screen printing, and ink writing. In recent years, marking by means of a laser beam has also become of interest, since this technique enables simple and efficient marking. Laser marking is a technique for marking, for example, marks, barcodes, and images on the surface of such materials as metal, ceramic, or polymeric organic material by irradiating the surface with a laser beam.

Examples of the laser marking technique include (1) a marking method utilizing change in surface conditions [roughening or concaving] of an object through etching of the object by means of laser beam irradiation. However, this method has the drawback that the boundary between the laser-irradiated portion and the non-irradiated portion is not distinct. In view of the foregoing, there has been proposed an improvement to this method, in which a multi-layer structure formed from different resins is irradiated with a laser beam, thereby etching only the outermost resin layer. However, this improved method entails drawbacks, in that intricate processes are required for production of a molded product and laser beam irradiation conditions must be carefully regulated.

Also, there has been proposed (2) a marking method utilizing decoloration, discoloration, or modification of a pigment or dye located at a site of laser-beam irradiation [e.g., Japanese Patent Application Laid-Open (*kokai*) Nos. 3-10884 and 5-295274]. However, this method entails drawbacks, in that a limitation is imposed on the type of a pigment or dye which can be added to the laser-beam irradiation site, and the pigment or dye is readily decolored or colored under heating, leading to spreading of a discolored area and indistinct contours of marked letters.

Furthermore, there has been proposed (3) a marking method utilizing change in surface conditions [convexing] of an object by foaming of a resin material through laser beam irradiation [Japanese Patent Publication (*kokoku*) No. 2-47314]. However, this method involves the following problems: optimal laser beam irradiation conditions must be determined in accordance with the resin material to be employed; and, when the surface of a resin composition containing a plurality of resin components (generally, a plurality of resin materials is employed) is subjected to marking, large amounts of labor and time are required to determine optimal laser beam irradiation conditions.

Objects of the present invention are to provide a laser marking resin composition used for the formation of a distinct marking on the product through irradiation with a laser beam, and exhibit excellent recyclability.

### Disclosure of the Invention

The present inventor has performed extensive studies, and on the basis of the results of the studies has accomplished the invention described below.

The present inventor has found that the aforementioned object can be achieved by provision of a laser marking resin composition containing an aromatic polycarbonate resin, and a reactive group-containing silicone compound and/or a metallic salt of an organic compound (hereinafter will be referred to simply as an "organic compound metallic salt") in a specific amount on the basis of the entirety of the aromatic polycarbonate resin. The invention has been accomplished on the basis of this finding.

The invention provides the following.
[1] Use of a resin composition comprising an aromatic polycarbonate resin (A) and a reactive group-containing silicone compound (B) and optionally an organic compound metallic salt (C), wherein the amount of the component (A) is 90 to 99.95 mass% and the total amount of the components (B) and (C) is 0.05 to 10 mass%, as laser marking resin composition.
[2] The use according to item [1], wherein the reactive group-containing silicone compound (B) has a reactive group and a phenyl group.
[3] The use according to item [1] or [2], wherein the reactive group-containing silicone compound (B) has one or more reactive groups selected from the group consisting of an alkoxy group, a hydroxy group, an epoxy group, and a vinyl group.
[4] The use according to any of items [1] to [3], wherein the organic compound metallic salt (C) is one or more species selected from the group consisting of an organic alkali metal salt, an organic alkaline earth metal salt, and an acid-salt-group-containing aromatic vinyl-based resin.
[5] The use according to any of items [1] to [4], which further comprises a polytetrafluoroethylene (D), in an amount of 0.05 to 2 parts by mass on the basis of 100 parts by mass of the total amount of the components (A), (B), and (C).
[6] The use according to any of items [1] to [5], wherein the laser marking resin composition is formed into a molded product.

### Best Mode for Carrying Out the Invention

Embodiments of the present invention will next be described in detail.

The present invention provides the use of a resin composition containing an aromatic polycarbonate resin (component (A)), and a reactive group-containing silicone compound (component (B)) and/or an organic compound metallic salt (component (C)), wherein the amount of the component (A) is 90 to 99.95 mass% and the total amount of the components (B) and (C) is 0.05 to 10 mass%. Next will be described the aromatic polycarbonate resin (component (A)), the reactive group-containing silicone compound (component (B)), and the organic compound metallic salt (component (C)), which constitute the resin composition which is used according to the invention.

### (A) Aromatic polycarbonate resin

The aromatic polycarbonate resin employed as the component (A) in the use of the present invention is preferably an aromatic polycarbonate resin having a structural unit represented by the following formula (1): 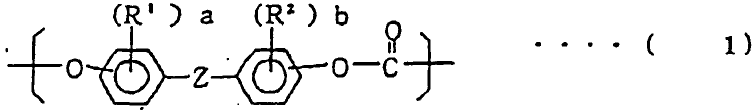 [wherein each of R¹ and R² represents a C1-C6 alkyl group or a phenyl group; Z represents a single bond, a C1-C20 alkylene group, a C2-C20 alkylidene group, a C5-C20 cycloalkylene group, a C5-C20 cycloalkylidene group, -SO₂-, -SO-, -S-, -O-, or -CO-; and each of "a" and "b" represents an integer of 0 to 4].

Examples of the C1-C6 alkyl group represented by R¹ or R² in the formula (1) include a methyl group, an ethyl group, an n-propyl group, an i-propyl group, an n-butyl group, an i-butyl group, a sec-butyl group, a tert-butyl group, an n-pentyl group, and an n-hexyl group. Examples of the C1-C20 alkylene group represented by Z in the formula (1) include a methylene group, an ethylene group, a trimethylene group, and a tetramethylene group. Examples of the C2-C20 alkylidene group include an ethylidene group, a propylidene group, an isopropylidene group, a butylidene group, and a pentylidene group. Examples of the C5-C20 cycloalkylene group include a cyclopentylene group and a cyclohexylene group. Examples of the C5-C20 cycloalkylidene group include a cyclopentylidene group and a cyclohexylidene group.

The aromatic polycarbonate oligomer may be produced through, for example, reaction between a dihydric phenol compound and a carbonate precursor (e.g., phosgene or a carbonic acid ester compound) in a solvent such as methylene chloride. Alternatively, the oligomer may be produced through ester interchange reaction between a dihydric phenol compound and a carbonate precursor such as diphenyl carbonate.

Examples of the dihydric phenol compound which may be employed herein include 4,4'-dihydroxydiphenyl; bis(4-hydroxyphenyl)alkanes such as 1,1-bis(4-hydroxyphenyl)methane, 1,1-bis(4-hydroxyphenyl)ethane, 2,2-bis(4-hydroxyphenyl)propane, 2,2-bis(3-methyl-4-hydroxyphenyl)propane, 2,2-bis(3-phenyl-4-hydroxyphenyl)propane, and 2,2-bis(3,5-dimethyl-4-hydroxyphenyl)propane; bis(4-hydroxyphenyl)cycloalkanes such as 1,1-bis(9-hydroxyphenyl)cyclohexane; bis(9-hydroxyphenyl) sulfide; bis(4-hydroxyphenyl) sulfone; bis(4-hydroxyphenyl) sulfoxide; bis(4-hydroxyphenyl) ether; and 4,4'-dihydroxybenzophenone. Of these, 2,2-bis(4-hydroxyphenyl)propane (Bisphenol A) is particularly preferred. These dihydric phenol compounds may be employed singly or in combination of two or more species. Examples of the carbonic acid ester compound include diaryl carbonates such as diphenyl carbonate; and dialkyl carbonates such as dimethyl carbonate and diethyl carbonate.

The aromatic polycarbonate oligomer may have a linear structure or a branched structure. When an aromatic polycarbonate oligomer having a branched structure is produced, a branching agent is employed. Examples of the branching agent which may be employed include polyfunctional aromatic compounds such as 1,1,1-tris(4-hydroxyphenyl)ethane, α,α',α"-tris(4-hydroxyphenyl)-1,3,5-triisopropylbenzene, 1-[α-methyl-α-(4'-hydroxyphenyl)ethyl]-4-[α',α'-bis(4"-hydroxyphenyl) ethyl] benzene, phloroglucin, trimellitic acid, and isatin bis(o-cresol).

Examples of the terminal stopper which may be employed include phenol, p-cresol, p-tert-butylphenol, p-tert-octylphenol, p-cumylphenol, p-nonylphenol, p-tert-amylphenol, bromophenol, tribromophenol, and pentabromophenol. Of these, phenol compounds containing no halogen atom are preferred, since they less adversely affect the environment.

The aromatic polycarbonate resin may be an aromatic polycarbonate resin having an alkylphenoxy group having a C10-C35 alkyl substituent and serving as an end group. When such a resin is produced, a terminal stopper; for example, docosylphenol, tetracosylphenol, hexacosylphenol, octacosylphenol, triacontylphenol, dotriacontylphenol, or tetratriacontylphenol, may be employed. An aromatic polycarbonate resin having such a long-chain alkylphenoxy group serving as an end group exhibits excellent fluidity when melted during the course of molding. Therefore, when the resin is molded into a product, the quality and productivity of the molded product are enhanced.

The aromatic polycarbonate resin may be an aromatic polycarbonate copolymer having an aromatic polycarbonate structural unit represented by the aforementioned formula (1) and a polyorganosiloxane structural unit represented by the following formula (2): 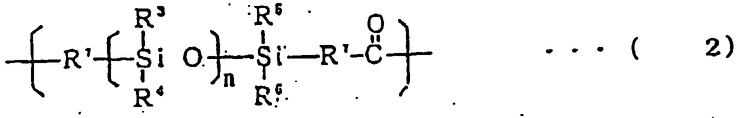 [wherein each of R³ through R⁶ represents a C1-C6 alkyl group or a phenyl group; R⁷ represents an organic residue including an aliphatic group or an aromatic group; and "n" represents an integer of 1 to 500].

Examples of the alkyl group represented by each of R³ through R⁶ in the formula (2) include alkyl groups represented by R¹ and R² in the aforementioned formula ( 1). Examples of the organic residue represented by R⁷ include an o-allylphenol residue, a p-hydroxystyrene residue, and a eugenol residue. A polyorganosiloxane structural unit in which "n" is 5 to 100 is more preferred.

The aromatic polycarbonate copolymer having the polyorganosiloxane structural unit can be produced through, for example, the following procedure: an aromatic polycarbonate oligomer for forming an aromatic polycarbonate segment of the copolymer and a polyorganosiloxane having, at an end of the molecule, a reactive group (e.g., an o-allylphenol group, a p-hydroxystyrene group, or a eugenol residue) for forming a polyorganosiloxane segment of the copolymer are dissolved in a solvent such as methylene chloride, chlorobenzene, or chloroform; a caustic alkali aqueous solution of dihydric phenol is added to the resultant solution; and the resultant mixture is subjected to interfacial polycondensation by use of a catalyst (e.g., a tertiary amine such as triethylamine or a quaternary ammonium salt such as trimethylbenzylammonium chloride) in the presence of a phenol compound serving as an end-capping agent.

In the aromatic polycarbonate copolymer, the incorporation amount of the polyorganosiloxane structural unit is preferably 0.1 to 10 mass%, for the following reasons. When the incorporation amount of the polyorganosiloxane structural unit is less than 0.1 mass%, the aromatic polycarbonate copolymer exhibits unsatisfactory laser marking properties, whereas when the incorporation amount of polyorganosiloxane structural unit exceeds 10 mass%, heat resistance and flame retardancy of the copolymer are lowered. Examples of the polyorganosiloxane structural unit include a polydimethylsiloxane structural unit, a polymethylphenylsiloxane structural unit, and a polydiphenylsiloxane structural unit. Of these, a polydimethylsiloxane structural unit is preferably contained in the copolymer. The amount of the polyorganosiloxane structural unit contained in the aromatic polycarbonate copolymer is more preferably 0.3 to 3 mass%.

The aromatic polycarbonate resin employed as the component (A) in the present invention has a viscosity average molecular weight of 10,000 to 40,000, preferably 12,000 to 30,000. When the viscosity average molecular weight of the aromatic polycarbonate resin is less than 10,000, the resultant molded product may exhibit insufficient mechanical properties and heat resistance, whereas when the viscosity average molecular weight exceeds 40,000, the melted resin may exhibit low fluidity, leading to poor moldability. (B) Reactive silicone compound

A reactive group-containing silicone compound is employed as the component (B) of the resin composition used in the present invention. This is because when a silicone compound containing no reactive group is employed as the component (B), the resultant resin composition does not exhibit laser-marking properties. The reactive group-containing silicone compound is particularly preferably a silicone compound containing one or more reactive groups selected from the group consisting of an alkoxy group (e.g., a methoxy group or an ethoxy group), a hydroxy group, an epoxy group, and a vinyl group.

The silicone compound preferably has a refractive index of 1.45 to 1.55. When the silicone compound having such a refractive index and containing a reactive group is employed as the component (B), the resultant flame-retardant polycarbonate resin composition exhibits excellent transparency and is highly useful as a material of a molded product which is required to have high transparency.

The silicone compound employed as the component (B) is more preferably a silicone compound having a structure in which a phenyl group is bonded to a silicon atom at the main chain of the molecule. This is because the flame-retardant polycarbonate resin composition containing, as the component (B), such a more preferred silicone compound can sufficiently maintain excellent properties of the polycarbonate resin. Specific examples of the more preferred silicone compound include silicone compounds having a main chain formed of a polymethylphenylsiloxane structure or a polydiphenylsiloxane structure, and containing, at an end or side chain of the molecule, one or more reactive groups selected from among an alkoxy group, a hydroxy group, an epoxy group, and a vinyl group.

The silicone compound has a number average molecular weight of at least 200, preferably 500 to 5,000,000. The silicone compound may assume any form (e.g., oil, varnish, gum, powder, or pellet).

### (C) Organic compound metallic salt

The optionally present organic compound metallic salt (component (C)) in the resin composition used in the present invention is preferably one or more organic compound metallic salts selected from the group consisting of an organic alkali metal salt, an organic alkaline earth metal salt, and an acid-salt-group-containing aromatic vinyl-based resin. The organic alkali metal salt and the organic alkaline earth metal salt are chosen from alkali metal salts and alkaline earth metal salts of an organic acid ester or an organic acid having at least one carbon atom. Examples of the organic acid or the organic acid ester include organic sulfonic acids and organic carboxylic acids. Examples of the alkali metal include sodium, potassium, lithium, and cesium, and examples of the alkaline earth metal include magnesium, calcium, strontium, and barium. Of the organic compound metallic salts, sodium salts, potassium salts, and cesium salts of organic acids are particularly preferred. Such an organic acid salt may be substituted with a halogen atom such as fluorine, chlorine, or bromine.

Among organic sulfonic acid salts, alkali metal salts and alkaline earth metal salts of perfluoroalkanesulfonic acids are particularly preferred. Examples of the perfluoroalkanesulfonic acid salt include alkali metal salts and alkaline earth metal salts of perfluoromethanesulfonic acid, perfluoroethanesulfonic acid, perfluoropropanesulfonic acid, perfluorobutanesulfonic acid, perfluoromethylbutanesulfonic acid, perfluorohexanesulfonic acid, perfluoroheptanesulfonic acid, and perfluorooctanesulfonic acid. Of these, potassium salts of perfluoroalkanesulfonic acids are particularly preferred. Examples of other preferred organic sulfonic acid salts include alkali metal salts and alkaline earth metal salts of organic sulfonic acids such as 2,5-dichlorobenzenesulfonic acid, 2,4,5-trichlorobenzenesulfonic acid, diphenylsulfone-3-sulfonic acid, diphenylsulfone-3,3'-disulfonic acid, and naphthalenetrisulfonic acid.

Preferred examples of organic carboxylic acid salts include alkali metal salts and alkaline earth metal salts of perfluoroformic acid, perfluoromethanecarboxylic acid, perfluoroethanecarboxylic acid, perfluoropropanecarboxylic acid, perfluorobutanecarboxylic acid, perfluoromethylbutanecarboxylic acid, perfluorohexanecarboxylic acid, perfluoroheptanecarboxylic acid, and perfluorooctanecarboxylic acid.

Among acid-salt-group-containing aromatic vinyl-based resins, aromatic vinyl-based resins having a structure in which some of hydrogen atoms of the aromatic ring at the polymer chain are substituted with acid salt groups are preferred. The aromatic vinyl-based resin may be an aromatic vinyl-based resin containing at least a styrene-derived structural unit in a polymer chain of, for example, polystyrene, rubber-modified polystyrene, a styreneacrylonitrile copolymer, or an acrylonitrile-butadienestyrene copolymer resin. Of these, a polystyrene resin is particularly preferred. Examples of the acid salt include alkali metal salts and alkaline earth metal salts of sulfonic acid, boric acid, and phosphoric acid. No particular limitations are imposed on the ratio of substitution with such an acid salt group, and the ratio may be appropriately determined within a range of 10 to 100%.

The acid-salt-group-containing aromatic vinyl-based resin is preferably an acid-salt-group-containing polystyrene resin represented by the following formula (3): 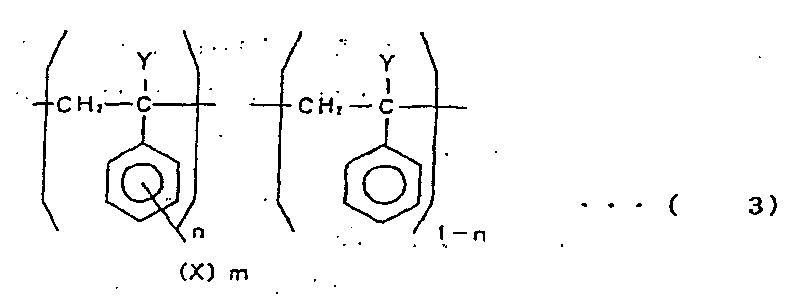 [wherein X represents an acid salt group; Y represents a hydrogen atom or a C1-C10 hydrocarbon group; "m" represents an integer of 1 to 5; and "n" represents the mol fraction of a styrene-derived structural unit substituted with an acid salt group (0 < n ≤ 1)].

The acid salt group represented by X in the formula (3) is preferably a sulfonic acid salt group, a boric acid salt group, or a phosphoric acid salt group. Preferred examples of the acid salt include alkali metal (e.g., sodium or potassium) salts and alkaline earth metal (e.g., magnesium or calcium) salts of these acids. Y in the formula (3) is preferably a hydrogen atom. When Y is a hydrocarbon group, the hydrocarbon group is particularly preferably a methyl group.

The acid-salt-group-containing aromatic vinyl-based resin may be produced through a method in which an aromatic vinyl-based monomer containing, for example, a sulfo group is polymerized, or the aromatic vinyl-based monomer is copolymerized with another monomer capable of being copolymerized with the vinyl-based monomer; and the resultant polymer or copolymer is neutralized with a basic substance. Alternatively, the acid-salt-group-containing aromatic vinyl-based resin may be produced through a method in which an aromatic vinyl-based polymer or an aromatic vinyl-based copolymer is sulfonated, and the thus-sulfonated polymer or copolymer is neutralized with a basic substance. When the latter method is employed, an acid-salt-group-containing polystyrene-based resin can be produced through, for example, the following procedure: sulfuric anhydride is added to a 1,2-dichloroethane solution of a polystyrene resin, to thereby allow reaction to proceed; the thus-produced polystyrene sulfonate is neutralized with a basic substance such as sodium hydroxide or potassium hydroxide; and the resultant reaction product is purified, to thereby remove sodium sulfate (i.e., by-product) thoroughly. In this case, preferably, a polystyrene resin having a weight average molecular weight of 1,000 to 300,000 is sulfonated.

The resin composition used in the present invention contains the aromatic polycarbonate resin (component (A)), and the reactive group-containing silicone compound (component (B)) and optionally the organic compound metallic salt (component (C)), wherein the amount of the component (A) is 90 to 99.95 mass% and the total amount of the components (B) and (C) is 0.05 to 10 mass%. In the laser marking resin composition, in addition to component (A), the reactive group-containing silicone compound (component (B)) is incorporated, and optionally the organic compound metallic salt (component (C)) may be incorporated. Alternatively, both the components (B) and (C) may be incorporated. The component (B) and the optional component (C) are incorporated into the resin composition such that the total amount thereof falls within the above range, for the following reasons. When the total amount of the components (B) and (C) is less than 0.05 mass%, the resultant composition exhibits unsatisfactory laser marking properties, whereas when the total amount of the components (B) and (C) exceeds 10 mass%, mechanical strength (e.g., impact resistance) of the resultant resin composition is lowered, and a molded product formed from the composition may have poor appearance. The total amount of the components (B) and (C) is more preferably 0.1 to 5 mass%. When an organic alkali metal salt or an organic alkaline earth metal salt alone is used as the component (C) of the resin composition, the amount of the component (C) is preferably 0.05 to 2 mass%.

When the laser marking resin composition used in the present invention containing the aforementioned essential components is required to have flame retardancy in addition to laser marking properties, preferably, the below-described polytetrafluoroethylene is incorporated as component (D) into the resin composition.

### (D) Polytetrafluoroethylene

The polytetrafluoroethylene (component (D)) incorporated into the resin composition used in the present invention has an average molecular weight of at least 500,000, preferably 500,000 to 10,000,000, more preferably 1,000,000 to 10,000,000. The component (D) is preferably a polytetrafluoroethylene exhibiting fibril formability, since the polytetrafluoroethylene exhibits an excellent melting/dripping prevention effect and can impart high flame retardancy to the resin composition. Such a polytetrafluoroethylene exhibiting fibril formability is preferably a polytetrafluoroethylene produced through, for example, the following procedure: tetrafluoroethylene is polymerized in an aqueous solvent at a pressure of 7 to 700 kPa and a temperature of 0 to 200°C (preferably 20 to 100°C) in the presence of sodium peroxydisulfide, potassium peroxydisulfide, or ammonium peroxydisulfide. Examples of commercially available polytetrafluoroethylene which may be employed include Teflon 6-J (available from Du Pont-Mitsui Fluorochemicals Co., Ltd.); Polyflon D-1, Polyflon F-103, Polyflon MPA, and Polyflon FA-100 (available from Daikin Industries, Ltd.); and Algoflon F5 (available from Montefluos). Such commercially available polytetrafluoroethylene may be employed as the component (D).

The incorporation amount of the polytetrafluoroethylene (component (D)) is 0.01 to 2 parts by mass, preferably 0.01 to 1 parts by mass, on the basis of 100 parts by mass of the total amount of the aforementioned components (A), (B) and (C). The incorporation amount of the component (D) is determined so as to fall within the above range, for the following reasons. When the incorporation amount of the component (D) is less than 0.01 parts by mass, the resultant resin composition exerts an insufficient melting/dripping prevention effect, whereas when the incorporation amount of the component (D) exceeds 2 parts by mass, the impact resistance of the resultant resin composition is lowered.

If desired, the laser marking resin composition of the present invention may further contain, in a typical incorporation amount, an additive which is generally employed for aromatic polycarbonate resins, such as an antioxidant, a plasticizer, a stabilizer, an antistatic agent, a slipping agent, an anti-blocking agent, or an anti-clouding agent.

When the laser marking resin composition is produced, the components of the composition can be mixed or melt-kneaded by the use of an apparatus which is employed for mixing or melt-kneading of aromatic polycarbonate resins; for example, a Banbury mixer, a roll, a single-screw extruder, or a multi-screw extruder. When the laser marking resin or the laser marking resin composition is molded into a variety of products, molding can be performed in a manner similar to that of a known technique for molding of an aromatic polycarbonate resin, such as injection molding, extrusion molding, or blow molding.

Examples of the laser marking apparatus which may be employed for marking of the thus-obtained molded product include marking apparatuses employing a laser beam, such as an excimer laser, a nitrogen laser, an Nd:YAG laser, a crystal laser, and a carbon dioxide gas laser.

The reason why a distinct marking is formed, through laser beam irradiation, on a molded product formed through molding or a similar process of the resin composition of the present invention has not yet been elucidated. However, the reason is considered to be as follows. When the composition undergoes a molding process such that at least a portion of an amorphous state is present in the crystalline resin among the amorphous resin, the molded product exhibits transparency since the difference in refractive index between the amorphous resin and the crystalline resin is small. When the amorphous portion of the crystalline resin is irradiated with a laser beam, the portion is crystallized, the difference in refractive index between the amorphous resin and the crystallized portion becomes large, and a white marking is formed at the crystallized portion.

The laser marking resin composition used in the present invention does not contain a coloring material such as carbon black; i.e., the resin composition is a transparent or white material. Therefore, a white marking can be formed on a molded product formed from the transparent material, and a brown marking can be formed on a molded product formed from the white material. The molded product is suitable for use in a variety of electric/electronic apparatus parts, machine parts, and automobile parts; for example, housings of office automation apparatuses and optical disks, which are formed from a transparent or white material.

When a molded product formed through molding of the laser marking resin composition used in the present invention (i.e., a transparent or white material containing no coloring material) is recycled after use thereof, the recycled product is less contaminated with impurities. Therefore, the recycled product exhibits good physical properties and has good appearance; i.e., the molded product has excellent recyclability. The transparent or white material may be colored by use of a coloring material of arbitrary color other than white or brown.

The present invention will next be described in more detail with reference to Examples and Comparative Examples, but the invention is not limited to the Examples.

### [Example 1]

### (1) Production of laser marking resin composition and molded product

The following components were employed as raw materials: component (A): an aromatic polycarbonate resin having a viscosity average molecular weight of 17,000 and a melt flow rate of 19 g/10 minutes (temperature: 300°C, load: 11.77 N) [Toughlon A1900, available from Idemitsu Petrochemical Co., Ltd.] (98 parts by mass); and component (B): methylphenylsilicone having a vinyl group and a methoxy group serving as reactive groups [KR219, available from Shin-Etsu Chemical Co., Ltd.] (2 parts by mass).

An antioxidant (0.3 parts by mass) [Irganox 1076 (available from Ciba Specialty Chemicals) (0.2 parts by mass) and Irgaphos 168 (available from Ciba Specialty Chemicals) (0.1 parts by mass)] was added to the components (A) and (B) (total amount: 100 parts by mass), and the resultant mixture was fed to an extruder [TEM-35, product of Toshiba Machine Co., Ltd.], and melt-kneaded at 260 to 280°C, to thereby yield pellets. The thus-obtained resin composition pellets were dried at 120°C for four hours, and then subjected to molding by use of an injection molding apparatus [100-EN, product of Toshiba Machine Co., Ltd.] under the following conditions: molding temperature: 250 to 280°C, die temperature: 80°C, to thereby form a square plate-like test piece (thickness: 2 mm, size: 15 cm × 15 cm). The test piece was colorless and transparent, and was found to have a haze of 2% as measured in accordance with JIS K 7105.

### (2) Laser marking of molded product

The characters " 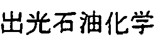 2001" were marked on the test piece formed in (1) above by the use of a carbon dioxide gas laser marking apparatus [CLM-03, product of TDK Corporation] under the following operation conditions: wavelength of laser beam: 10.6 µm, scan speed: 200 mm/sec, output: 1 to 8 W (step: 0.2 W). As a result, a white marking was formed on the test piece.

### (3) Evaluation of laser marking

For evaluation of the laser marking performed in (2) above, the visibility of the marking was evaluated on the basis of (a) minimum laser output [w] required for forming, on the test piece, an marking which can be identified when the marked test piece is placed on a fluorescent lamp as a basle; and (b) minimum laser output [w] required for forming, on the test piece, an marking which can be identified when the marked test piece is placed on a gray paper sheet as a base. Three persons evaluated the visibility of the marking through visual observation. The average of the evaluations by the three persons was employed for evaluation of conspicuousness of the marking. The results are shown by the following four ratings. AA: very good contrast between the base color and the marked letter color; Bb: good contrast between the base color and the marked letter color; CC: fair contrast between the base color and the marked letter color; and DD: Poor contrast between the base color and the marked letter color.

### (4) Evaluation of physical properties of resin composition

In addition to laser marking properties, flame retardancy and impact resistance of the aromatic polycarbonate resin composition produced in (1) above were evaluated.

For evaluation of flame retardancy of the resin composition, a test piece (thickness: 3 mm) formed from the composition was subjected to the vertical combustion test in accordance with Underwriters Laboratory Subject 94. The impact resistance of the composition was measured in accordance with JIS K 7110 at the temperature of 23°C.

A laser marking test piece formed through injection molding of the resin composition was evaluated in terms of appearance through visual observation. The test piece had good appearance.

The composition and results of the evaluations of the aforementioned laser marking resin composition are shown in Table 1. In Table 1, "Silicone compound (1')" represents the silicone compound employed as the component (B) in Example 1.

### [Example 2]

### (1) Production of laser marking resin composition and molded product

The procedure of Example 1 (1) was repeated, except that the following components were employed as raw materials: component (A): the aromatic polycarbonate resin employed in Example 1 (1) (99 parts by mass), and component (B): dimethylsilicone having a methoxy group serving as a reactive group (KC-89, product of Shin-Etsu Chemical Co., Ltd.] (1 part by mass), to thereby produce a resin composition and a test piece.

### (2) Laser marking, evaluation thereof, and evaluation of physical properties

In a manner similar to that of Example 1 (2) through (4), test pieces formed from the resin composition produced in (1) above were employed for laser marking, evaluation of the laser marking, and evaluation in terms of physical properties of the resin composition.

The results are shown in Table 1. In Table 1, "Silicone compound (2)" represents the silicone compound employed as the component (B) in Example 2.

### [Example 3]

### (1) Production of laser marking resin composition and molded product

The procedure of Example 1 (1) was repeated, except that the following components were employed as raw materials: component (A): the aromatic polycarbonate resin employed in Example 1 (1) (99. 9 parts by mass), and component (C): potassium perfluorobutanesulfonate serving as an organic compound metallic salt (0.1 parts by mass), to thereby produce a resin composition and a test piece.

### (2) Laser marking, evaluation thereof, and evaluation of physical properties

In a manner similar to that of Example 1 (2) through (4), test pieces formed from the resin composition produced in section (1) above were employed for laser marking, evaluation of the laser marking, and evaluation in terms of physical properties of the resin composition.

The results are shown in Table 1. In Table 1, "Organic compound metallic salt (1)" represents the organic compound metallic salt employed as the component (C) in Example 3.

### [Example 4]

### (1) Production of laser marking resin composition and molded product

The procedure of Example 1 (1) was repeated, except that the following components were employed as raw materials: component (A): the aromatic polycarbonate resin employed in Example 1 (1) (98. 5 parts by mass), component (B): the reactive group-containing silicone compound employed in Example 1 (1) (0.5 parts by mass), and component (C): sodium polystyrene sulfonate (1 part by mass), to thereby produce a resin composition and a test piece.

### (2) Laser marking, evaluation thereof, and evaluation of physical properties

In a manner similar to that of Example 1 (2) through (4), test pieces formed from the resin composition produced in section (1) above were employed for laser marking, evaluation of the laser marking, and evaluation in terms of physical properties of the resin composition.

The results are shown in Table 1. In Table 1, "Organic compound metallic salt (2)" represents the organic compound metallic salt employed as the component (C) in Example 4.

### [Example 5]

### (1) Production of laser marking resin composition and molded product

The procedure of Example 1 (1) was repeated, except that the following components were employed as raw materials: component (A): the aromatic polycarbonate resin employed in Example 1 (1) (98.8 parts by mass), component (B): the reactive group-containing silicone compound employed in Example 2 (1) (1 part by mass), component (C): potassium diphenylsulfonesulfonate (0.2 parts by mass), and component (D): polytetrafluoroethylene [CD076, product of Asahi Glass Co., Ltd.] (0.3 parts by mass on the basis of 100 parts by mass of the total amount of the components (A) through (C)), to thereby produce a resin composition and a test piece.

### (2) Laser marking, evaluation thereof, and evaluation of physical properties

In a manner similar to that of Example 1 (2) through (4), test pieces formed from the resin composition produced in section (1) above were employed for laser marking, evaluation of the laser marking, and evaluation in terms of physical properties of the resin composition.

The results are shown in Table 1. In Table 1, "Organic compound metallic salt (3)" represents the organic compound metallic salt employed as the component (C) in Example 5.

### [Comparative Example 1]

The procedure of Example 1 was repeated, except that the aromatic polycarbonate resin employed in Example 1 (1) was employed as a molding material, to thereby form a test piece and subject the test piece to laser marking.

As a result, the test piece had good appearance, but no marking was formed on the test piece. The results are shown in Table 1.

### [Comparative Example 2]

The procedure of Example 1 was repeated, except that the following components were employed as raw materials: component (A): the aromatic polycarbonate resin employed in Example 1 (1) (99 parts by mass), and component (B): dimethylsilicone [SH200, available from Dow Corning Toray Silicone Co., Ltd.] (a silicone compound containing no reactive group, which was employed instead of the component (B) in Example 1 (1) for comparison) (1 part by mass), to thereby form a test piece and subject the test piece to laser marking.

As a result, the test piece had good appearance, but no marking was formed on the test piece. The results are shown in Table 1. In Table 1, "Silicone compound [comparison]" represents the silicone compound employed in Comparative Example 2.

### [Comparative Example 3]

The procedure of Example 1 was repeated, except that the following components were employed as raw materials: component (A): the aromatic polycarbonate resin employed in Example 1 (1) (99.9 parts by mass), and component (C): potassium sulfate (an inorganic compound metallic salt, which was employed instead of an organic compound metallic salt for comparison) (0.1 parts by mass), to thereby form a test piece and subject the test piece to laser marking.

As a result, pimples were formed on the surface of the test piece; i.e., the test piece had poor appearance. In addition, no marking was formed on the test piece. The results are shown in Table 1. In Table 1, "Inorganic compound metallic salt [comparison]" represents the inorganic compound metallic salt employed in Comparative Example 3.

### [Comparative Example 4]

The procedure of Example 1 was repeated, except that the following components were employed as raw materials: component (A): the aromatic polycarbonate resin employed in Example 1 (1) (88 parts by mass), and component (B): the silicone compound employed in Example 1 (1) (12 parts by mass), to thereby form a test piece and subject the test piece to laser marking.

As a result, flow marks were generated on the test piece; i.e., the test piece had poor appearance. In addition, no marking was formed on the test piece. The results are shown in Table 1.

### [Comparative Example 5]

The procedure of Example 1 was repeated, except that the following components were employed as raw materials: component (A): the aromatic polycarbonate resin employed in Example 1 (1) (88 parts by mass), and component (C): the sodium polystyrene sulfonate employed in Example 4 (1) (12 parts by mass), to thereby form a test piece and subject the test piece to laser marking.

As a result, pimples were formed on the surface of the test piece; i.e., the test piece had poor appearance. In addition, no marking was formed on the test piece. The results are shown in Table 1.

**Table 1 (1)**

| Examples | | | Example 1 | Example 2 | Example 3 (not part of the invention) |
|---|---|---|---|---|---|
| Composition mass% | (A) | Aromatic polycarbonate resin | 98 | 99 | 99.9 |
| | (B) | Silicone compound (1) | 2 | - | - |
| | | Silicone compound (2) | - | 1 | - |
| | (C) | Organic compound metallic salt (1) | - | - | 0.1 |
| | | Organic compound metallic salt (2) | - | - | - |
| | | Organic compound metallic salt (3) | - | - | - |
| | (D) | Polytetrafluoroethylene (parts by mass) | - | - | - |
| Marking properties | Color of test piece | | Colorless and transparent | White | Colorless and transparent |
| | Haze of test piece (%) | | 2 | 90 | 2 |
| | Color of marking | | White | White | White |
| | Conspicuousness of marking | | BB | BB | BB |
| | Laser minimum output required for forming an identifiable marking (W) [fluorescent lamp] | | 1.2 | 1.2 | 1.2 |
| | Laser minimum output required for forming an identifiable marking (W) [gray paper sheet] | | 2.4 | 2.6 | 2.6 |
| Other physical properties | Flame retardancy [UL94] (thickness of test piece) | | V-0 (3 mm) | V-1 (3 mm) | V-0 (3 mm) |
| | Impact resistance [IZOD: 23°C] | | 80 | 75 | 85 |
| | Appearance of molded product | | Good | Good | Good |

**Table 1 (2)**

| Examples | | | Example 4 | Example 5 |
|---|---|---|---|---|
| Composition mass% | (A) | Aromatic polycarbonate resin | 98.5 | 98.8 |
| | (B) | Silicone compound (1) | 0.5 | - |
| | | Silicone compound (2) | - | 1 |
| | (C) | Organic compound metallic salt (1) | - | - |
| | | Organic compound metallic salt (2) | 1 | - |
| | | Organic compound metallic salt (3) | - | 0.2 |
| | (D) | Polytetrafluoroethylene (parts by mass) | - | 0.3 |
| Marking properties | Color of test piece | | Colorless and transparent | White |
| | Haze of test piece (%) | | 5 | 90 |
| | Color of marking | | Brown | Brown |
| | Conspicuousness of marking | | AA | AA |
| | Laser minimum output required for forming an identifiable marking (W) [fluorescent lamp] | | 0.8 | 1.0 |
| | Laser minimum output required for forming an identifiable marking (W) [gray paper sheet] | | 2.0 | 2.2 |
| Other physical properties | Flame retardancy [UL94] (thickness of test piece) | | V-0 (3 mm) | V-0 (1.5 mm) |
| | Impact resistance [IZOD: 23°C] | | 75 | 75 |
| | Appearance of molded product | | Good | Good |

**Table 1 (3)**

| Comparative Examples | | | Comparative Example 1 | Comparative Example 2 | Comparative Example 3 |
|---|---|---|---|---|---|
| Composition mass% | (A) | Aromatic polycarbonate resin | 100 | 99 | 99.9 |
| | (B) | Silicone compound (1) | - | - | - |
| | | Silicone compound [comparison] | - | 1 | - |
| | (C) | Organic compound metallic salt (2) | - | - | - |
| | | Inorganic compound metallic salt [comparison] | - | - | 0.1 |
| | (D) | Polytetrafluoroethylene (parts by mass) | - | - | - |
| Marking properties | Color of test piece | | Colorless and transparent | White | Milky white |
| | Haze of test piece (%) | | 2 | 90 | 25 |
| | Color of marking | | Colorless | Colorless | Colorless |
| | Conspicuousness of marking | | DD | DD | DD |
| | Laser minimum output required for forming an identifiable marking (W) [fluorescent lamp] | | 1.8 < | 1.8 < | 1.8 < |
| | Laser minimum output required for forming an identifiable marking (W) [gray paper sheet] | | 3.6 < | 3.6 < | 3.6 < |
| Other physical properties | Flame retardancy [UL94] (thickness of test piece) | | V-2 (3 mm) | V-2 (3 mm) | V-2 (3 mm) |
| | Impact resistance [IZOD: 23°C] | | 85 | 15 | 15 |
| | Appearance of molded product | | Good | Good | Pimples |

**Table 1 (4)**

| Comparative Examples | | | Comparative Example 4 | Comparative Example 5 |
|---|---|---|---|---|
| Composition mass% | (A) | Aromatic polycarbonate resin | 88 | 88 |
| | (B) | Silicone compound (1) | 12 | - |
| | | Silicone compound [comparison] | - | - |
| | (C) | Organic compound metallic salt (2) | - | 12 |
| | | Inorganic compound metallic salt [comparison] | - | - |
| | (D) | Polytetrafluoroethylene (parts by mass) | - | - |
| Marking properties | Color of test piece | | Milky white | Milky white |
| | Haze of test piece (%) | | 35 | 20 |
| | Color of marking | | Colorless | Colorless |
| | Conspicuousness of marking | | DD | DD |
| | Laser minimum output required for forming an identifiable marking (W) [fluorescent lamp] | | 1.8 < | 1.8 < |
| | Laser minimum output required for forming an identifiable marking (W) [gray paper sheet] | | 3.6 < | 3.6 < |
| Other physical properties | Flame retardancy [UL94] (thickness of test piece) | | V-2 (3 mm) | V-2 (3 mm) |
| | Impact resistance [IZOD: 23°C] | | 5 | 12 |
| | Appearance of molded product | | Flow marks | Pimples |

### Industrial Applicability

A distinct marking can be formed, through irradiation with a laser beam, on a molded product formed through molding of the resin composition used for laser marking according to the present invention. Therefore, the molded product is suitable for use in, for example, electric/electronic apparatus parts and automobile parts, which display characters, codes, etc. Since the resin composition contains no coloring material, the molded product, on which laser marking can be performed, is transparent. When the molded product is recycled after use thereof, the recycled product is less contaminated with impurities; i.e., the molded product has excellent recyclability.

## Claims

1. Use of a resin composition comprising an aromatic polycarbonate resin (A) and a reactive group-containing silicone compound (B) and optionally an organic compound metallic salt (C), wherein the amount of the component (A) is 90 to 99.95 mass% and the total amount of the components (B) and (C) is 0.05 to 10 mass%, as laser marking resin composition.

2. The use according to claim 1, wherein the reactive group-containlng silicone compound (B) has a reactive group and a phenyl group.

3. The use according to claim 1 or 2, wherein the reactive group-containing silicone compound (B) has one or more reactive groups selected from the group consisting of an alkoxy group, a hydroxy group, an epoxy group, and a vinyl group.

4. The use according to any of claims 1 to 3, wherein the organic compound metallic salt (C) is one or more species selected from the group consisting of an organic alkali metal salt, an organic alkaline earth metal salt, and an acid-salt-group-containing aromatic vinyl-based resin.

5. The use according to any of claims 1 to 4, wherein the resin composition further comprises a polytetrafluoroethylene (D), in an amount of 0.05 to 2 parts by mass on the basis of 100 parts by mass of the total amount of the components (A), (B), and (C).

6. The use according to any of claims 1 to 5, wherein the laser marking resin composition is formed into a molded product.

## Patentansprüche

1. Verwendung einer Harzzusammensetzung, umfassend ein Polycarbonat Harz (A) und eine reaktive-Gruppe-enthaltende Silikon-Verbindung (B) und optional ein Metallsalz einer organischen Verbindung (C), worin die Menge der Komponente (A) von 90 bis 99,5 Massen-% ist und der gesamte Anteil der Komponenten (B) und (C) von 0,05 bis 10 Massen-% ist, als Lasermarkierungs-Harzzusammensetzung

2. Die Verwendung nach Anspruch 1, worin die reaktive-Gruppe-enthaltende Silikon-Verbindung (B) eine reaktive Gruppe und eine Phenylgruppe besitzt.

3. Die Verwendung nach einem der Ansprüche 1 oder 2, worin die reaktive-Gruppe-enthaltende Slllkon-Verbindung (B) eine oder mehrere reaktive Gruppen besitzt, ausgewählt aus der Gruppe, die aus einer Alkoxy-Gruppe, einer Hydroxy-Gruppe, einer Epoxy-Gruppe und einer Vinyl-Gruppe besteht.

4. Die Verwendung nach einem der Ansprüche 1 bis 3, worin das Metallsalz einer organischen Verbindung (C) eine oder mehrere Spezles ist, ausgewählt aus der Gruppe, die aus einem organischen Alkalimetallsalz, einem organischen Erdalkalimetallsalz und einem Sduresalzgruppe-enthaltendem aromatischen Vinyl-basierten Harz besteht,

5. Die Verwendung nach einem der Ansprüche 1 bis 4, wobei die Harzzusammensetzung zusätzlich ein Polytetrafluoroethylen (D) In einer Menge von 0,05 bis 2 Massetellen auf der Basis von 100 Massetellen der gesamten Menge der Komponenten (A), (B) und (C) umfasst.

6. Die Verwendung nach einem der Ansprüche 1 bis 5, worin die Lasermarklerungs-Harzzusammensetzung zu einem Formkörper geformt wird.

## Revendications

1. Utilisation d'une composition de résine comprenant une résine aromatique polycarbonate (A) et un composé silicone contenant un groupe réactif (B) et en cas échéant contenant un sel métallique de composé organique (C), dans laquelle la quantité du composé (A) est de 90 à 99,95 % en masse et la quantité totale des constituants (B) et (C) est de 0,05 à 10 % en masse, à titre d'une composition de résine pour marquage au laser.

2. Utilisation selon la revendication 1, dans laquelle le composé silicone contenant un groupe réactif (B) possède un groupe réactif et un groupe phényle.

3. Utilisation selon les revendications 1 ou 2, dans laquelle le composé silicone contenant un groupe réactif (B) possède un ou plusieurs groupes réactifs sélectionnés parmi le groupe consistant en un groupe alkoxy, un groupe hydroxyle, un groupe époxy et un groupe vinyle.

4. Utilisation selon l'une quelconque des revendications 1 à 3, dans laquelle le sel métallique de composé organique (C) est d'une ou plusieurs espèces sélectionnés parmi le groupe consistant en un sel organique de métal alcalin, un sel organique de métal alcalino-terreux, et une résine aromatique basée sur du vinyle contenant un groupe sel d'acide.

5. Utilisation selon l'une quelconque des revendications 1 à 4, dans laquelle la composition de résine comprend en outre du polytétrafluoroéthylène (D) en quantité de 0,05 à 2 parties en masse sur la base de 100 parties en masse de la quantité totale des constituants (A), (B) et (C).

6. Utilisation selon l'une quelconque des revendications 1 à 5, dans laquelle la composition de résine pour marquage au laser est transformée en produit moulé.
